# EUROPEAN PATENT SPECIFICATION

(11) **EP 0 895 402 B1**
(45) Date of publication and mention of the grant of the patent: **28.07.2004**
(21) Application number: 98304503.0
(22) Date of filing: 08.06.1998
(51) Int. Cl.: H04N 1/047

(54) **Optical scanning system for a printer**
Optisches Abtastsystem für einen Drucker
Système de balayage optique pour une imprimante

(30) Priority: 30.07.1997 KR 9736172
(43) Date of publication of application: 03.02.1999
(73) Proprietor: Samsung Electronics Co., Ltd., Suwon-city, Kyungki-do (KR)
(72) Inventor: An, Seung-deog, Suji-eub, Yongin-city, Kyungki-do (KR); Choi, Min-ho, Suwon-city, Kyungki-do (KR)
(74) Representative: Robinson, Ian Michael

(56) References cited:
- US-A- 5 381 165
- US-A- 5 381 167
- PATENT ABSTRACTS OF JAPAN vol. 007, no. 093 (P-192), 19 April 1983 & JP 58 018640 A (RICOH KK), 3 February 1983
- PATENT ABSTRACTS OF JAPAN vol. 096, no. 010, 31 October 1996 & JP 08 146698 A (RICOH CO LTD), 7 June 1996

## Description

The present invention relates to an optical scanning system for a printer, and more particularly, to an optical scanning system of a printer in which beams are repeatedly scanned within an image recording area set in the middle portion of a photoreceptor belt.

US-A-5,381,167 discloses a color image forming apparatus having a registration mark formed on an image carrier belt.

JP-A-58 018 640 discloses a photoreceptor belt having disposed thereon a substantially continuous strip along a proceeding direction of the belt. The strip has reflective areas arranged at intervals along the proceeding direction, for sequence and belt shift control.

JP-A-08 146 698 discloses a further similar arrangement.

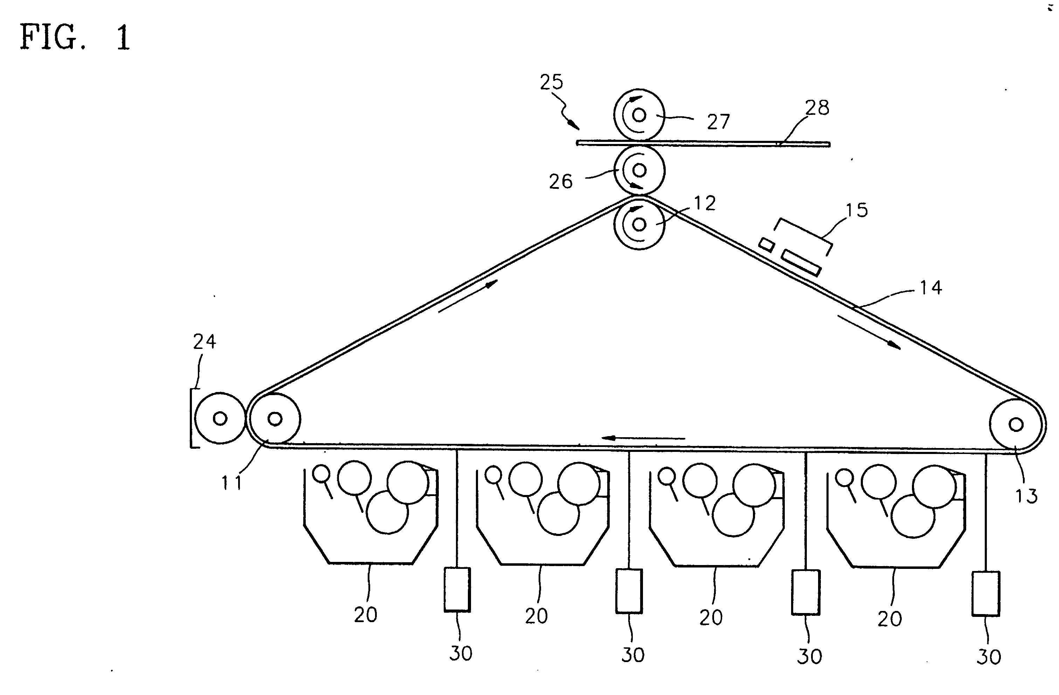

Referring to Figure 1 showing a general printer, a reset unit 15, optical scanning units 30, developing units 20, a drying unit 24, and a transferring unit 25 are arranged around and spaced a predetermined distance from a circulation path of a photoreceptor belt 14 which is a photosensitive medium circulating around three rollers 11, 12, and 13.

In a print operation, the optical scanning units 30 emit beams to the photoreceptor belt 14 passing through the reset unit 15. An electrostatic latent image is formed on the photoreceptor belt 14 by the emitted beam and the image is developed by developing solution supplied by the developing unit 20. A color image is formed by the optical scanning units 30 and the developing units 20 which emit beams having different color information and develop the image with developing material of corresponding colors. The color image formed on the photoreceptor belt 14 by the developing material passes through the drying unit 24, as the photoreceptor belt 14 circulates, and is first transferred to a transfer roller 26 rotating by being partially engaged with the photoreceptor belt 14. Sequentially, the image on the transfer roller 26 is transferred to a print paper 28 by rotation of the transfer roller 26 and a pressing roller 27 which rotate by being engaged with each other via the input print paper 28 to proceed the print paper.

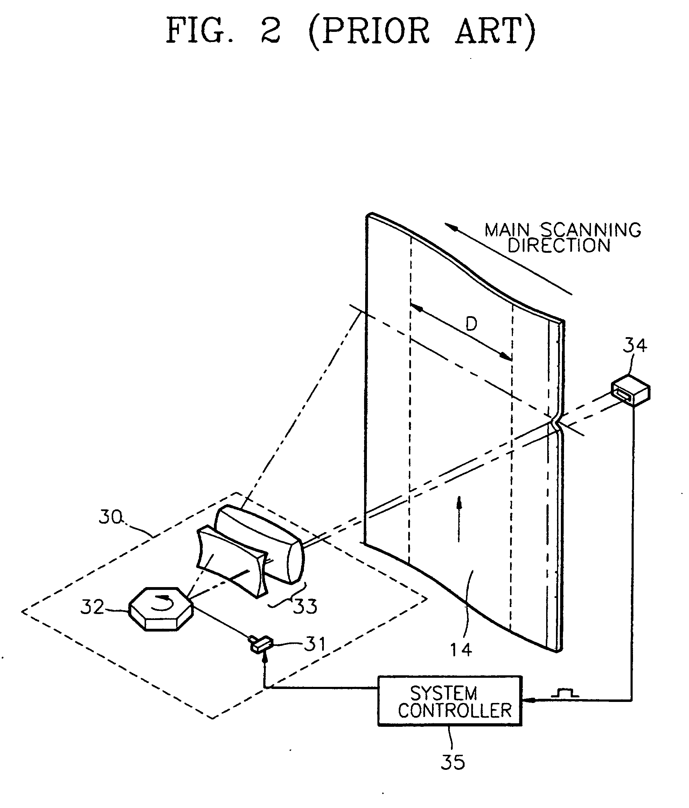

Figure 2 shows a conventional optical scanning system adopted in a printer operating as above. In Figure 2, the optical scanning system has an optical scanning unit 30, a photodetector 34, and a system controller 35. The optical scanning unit 30 scans a beam in a main scanning direction of the photoreceptor belt 14 operating in a direction indicated by an arrow. The optical scanning unit 30 includes a light source 31, a rotary polygonal mirror 32, and a lens unit 33. Here, the main scanning direction refers to a widthwise direction of the photoreceptor belt 14, or a direction perpendicular to a proceeding direction of the photoreceptor belt 14, and a sub-scanning direction is a proceeding direction of the photoreceptor belt 14 which is perpendicular to the main scanning direction.

The photodetector 34 detects a beam emitted by the optical scanning unit 30 and scanned around the edge of the photoreceptor belt 14. The system controller 35 synchronizes initialization of beam scan corresponding to actual image information in an image information recording area D set on the photoreceptor belt 14, using the pulses output by the photodetector 34 corresponding to a detection of beam. That is, the system controller 35 determines a falling edge of a pulse signal received from the photodetector 34 as the time when the beam emitted from the optical scanning unit 30 arrives at the edge of the photodetector web 14. Then, after the time that the beam is scanned from the edge of the photoreceptor belt 14 to the image information recording area D, the system controller 35 drives the light source 31 to emit an optical signal corresponding to image information.

However, since the optical signal corresponding to the image information is output from the light source 31 after the delay time set with reference to the falling edge of the pulse signal output from the photodetector 34, when there is a defective irregular portion at the edge of the photoreceptor belt 14, the leading edges of the beams scanned in the image information recording area D become irregular, that is, not parallel with each other along the sub-scanning direction.

It is an aim of the present invention to provide an optical scanning system of a printer which can maintain the leading edges of scanning parallel to each other in the image information recording area not affected by a defective edge line of a photoreceptor belt.

According to the present invention there is provided an optical scanning system for a printer as defined in claim 1, comprising: a photoreceptor belt; an optical scanning unit for scanning a beam onto the photoreceptor belt; a photodetector for detecting the beam emitted from said optical scanning unit and outputting an electrical signal corresponding to the detected beam as a scanning synchronous signal for said optical scanning unit; a system controller for receiving said electrical signal and controlling emission of said beam from said optical scanning unit; characterised by; a reflection strip disposed substantially continuous on said photoreceptor belt linearly along a preceeding direction of said belt for reflecting said beam; said photodetector for detecting said beam reflected by said reflection strip; and the system controller being arranged to control emission of said beam from said optical scanning unit in order to maintain leading edges of scanning parallel with regards to the substantially continuous reflection strip. The reflection strip has a different reflection index with respect to said belt.

Preferably, said optical scanning unit scans a beam onto a circulating photoreceptor belt in a direction inclined at an angle with respect to a proceeding direction of said photoreceptor belt.

Preferably, said reflecting strip is disposed at an edge portion of said photoreceptor belt.

Preferably, said reflection strip is disposed on said photoreceptor belt outside a predetermined image information recording area.

Preferably, said image information recording area is set in the middle of said photoreceptor belt.

Preferably, said reflection strip is inset from an edge of said photoreceptor belt by a predetermined narrow margin.

Preferably, the reflection strip is formed of a material having a different reflective index with respect to the photoreceptor belt.

According to a second aspect of the present invention there is provided a photoreceptor belt as defined in claim 8, for use in an optical scanning system of a printer, said photoreceptor belt being inter alia characterised by a substantially continuous reflection strip for reflecting an incident light beam.

Preferably, the reflection strip is linearly formed to lie along the proceeding direction at an edge of said photoreceptor belt.

According to a third aspect of the present invention a a printer comprising an optical scanning system and a photoreceptor belt, as defined in claim 10.

According to another aspect of the present invention there is provided an optical scanning method as defined in claim 11, for use in a printer, comprising the steps of: scanning a beam onto a circulating photoreceptor belt; detecting said beam being reflected from said photoreceptor belt by a reflection strip disposed substantially continuously thereon, and outputting an electrical signal corresponding to the detected beam as a scanning synchronous signal; and controlling emission of said beam in said scanning step with respect to said scanning synchronous signal.

In the preferred embodiment the optical scanning system comprises an optical scanning unit for scanning a beam onto a circulating photoreceptor belt in a direction inclined at an angle with respect to a proceeding direction of the photoreceptor belt, a reflection strip disposed at an edge portion of the photoreceptor belt off an image information recording area set in the middle of the photoreceptor belt and linearly formed along the proceeding direction of the photoreceptor belt, for reflecting an incident beam, a photodetector for detecting the beam emitted from the optical scanning unit and reflected by the reflection strip and outputting an electrical signal corresponding to the detected beam as a scanning synchronous signal for the optical scanning unit, and a system controller for receiving the electrical signal and controlling emission of beams of the optical scanning unit.

For a better understanding of the invention, and to show how embodiments of the same may be carried into effect, reference will now be made, by way of example, to the accompanying diagrammatic drawings, in which:
Figure 1 is a sectional view illustrating a general printer;
Figure 2 is a perspective view illustrating a conventional optical scanning system; and
Figure 3 is a perspective view illustrating a preferred embodiment of an optical scanning system.

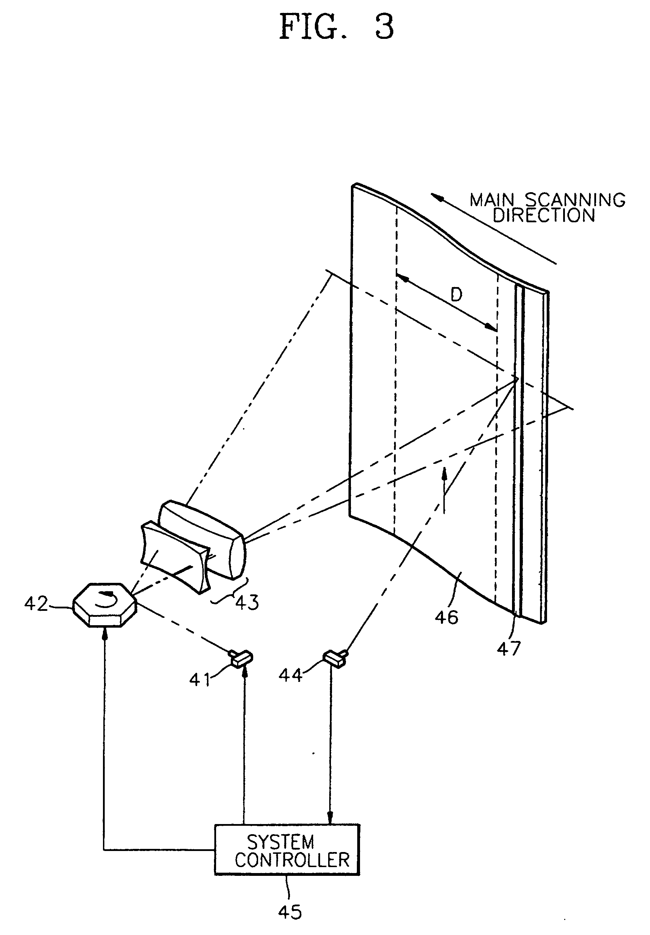

Referring to Figure 3 showing an optical scanning system according to the preferred embodiment of the present invention, a rotary polygonal mirror 42 for deflecting an input beam in a main scanning direction is disposed in front of a light source 41. A lens unit 43 is provided between the rotary polygonal mirror 42 and a photoreceptor belt 46. A reflection strip 47 is provided linearly at a position out of an image information recording area D on the photoreceptor belt 46. A photodetector 44 is arranged at a position where the light reflected by the reflection strip 47 can be received. The reflection strip 47 is formed of material having a different reflective index with respect to the photoreceptor belt 46.

A collimating lens (not shown) for converting a beam input from the light source 41 into a parallel beam is disposed between the light source 41 and the rotary polygonal mirror 42 along the optical path, and there is a cylindrical lens (not shown) for transmitting a beam in a main scanning direction while converging a beam in a sub-scanning direction along the optical path. The rotary polygonal mirror 42 having a plurality of reflection surfaces is rotated by a driving motor (not shown) controlled by a system controller 45. According to the rotation of the rotary polygonal mirror 42, the beam is reflected from the reflection surfaces of the mirror 42 and thereby periodically deflected.

The lens unit 43 for correcting a difference in the optical path of each beam deflected by the rotary polygonal mirror 42 up to the photoreceptor belt 46 and focusing the input beam in a main scanning line is composed of at least one or more f-θ lenses.

The operation of the optical scanning system having the above structure will now be described.

The beam emitted from the light source 41 in one direction is scanned in a main scanning direction onto the photoreceptor belt 46 via the rotary polygonal mirror 42 rotating at a constant speed and the lens unit 43. In doing so, as the reflection angle of the beam emitted from the light source 41 and reflected by the rotary polygonal mirror 42 continuously changes, the optical spot landing on the photoreceptor belt 46 moves from one edge portion of the photoreceptor belt to the opposite edge portion thereof in the main scanning direction. When the beam scanned along the main scanning direction arrives at the reflection strip 47 at some time, the photodetector 44 receives the beam reflected by the reflection strip 47 and outputs an electrical signal corresponding to the received beam while receiving the beam. When the above electrical signal is received from the photodetector 44, the system controller 45 temporarily stops operation of the light source 41, counts the time required for beams to be scanned from the reflection strip 47 to the image information recording area D, and again drives the light source 41 to generate an optical signal corresponding to image information.

Thus, without being affected by the defective edge of the photoreceptor belt 46, initialization of optical scanning corresponding to the image information at the start position of the image information recording area D can always be synchronized.

In the optical scanning system described above the leading edges of scanning can be even in the image information recording area, not affected by the defective edge of the photoreceptor belt.

## Claims

1. An optical scanning system for a printer, comprising:
a photoreceptor belt (46);
an optical scanning unit (41-43) for scanning a beam onto the photoreceptor belt (46);
a photodetector (44) for detecting the beam emitted from said optical scanning unit and outputting an electrical signal corresponding to the detected beam as a scanning synchronous signal for said optical scanning unit;
a system controller (45) for receiving said electrical signal and controlling emission of said beam from said optical scanning unit (41-43);
**characterised by**;
a reflection strip (47) disposed substantially continuously on said photoreceptor belt linearly along a proceeding directions of said belt for reflecting said beam, said reflection strip having a different reflection index with respect to said belt;
said photodetector (44) being arranged for detecting said beam reflected by said reflection strip (47); and
the system controller (45) being arranged to control emission of said beam from said optical scanning unit in order to maintain leading edges of scanning parallel with respect to the substantially continuous reflection strip (47).

2. An optical scanning system as claimed in claim 1, wherein said optical scanning unit (41-43) scans a beam onto a circulating photoreceptor belt (46) in a direction inclined at an angle with respect to a proceeding direction of said photoreceptor belt (46).

3. An optical scanning system claimed in claim 1 or 2, wherein said reflecting strip is disposed at an edge portion of said photoreceptor belt.

4. An optical scanning system claimed in claim 1, 2 or 3, wherein said reflection strip (47) is disposed on said photoreceptor belt (46) outside a predetermined image information recording area.

5. An optical scanning system as claimed claim 4 wherein said image information recording area is set in the middle of said photoreceptor belt (46).

6. An optical scanning system as claimed in any preceding claim, wherein said reflection strip (47) is inset from an edge of said photoreceptor belt (46) by a predetermined narrow margin.

7. An optical scanning system as claimed in claim 6, wherein the reflection strip (47) is formed of a material having a different reflective index with respect to the photoreceptor belt (46).

8. A photoreceptor belt for use in an optical scanning system of a printer, said photoreceptor belt (46) being **characterised by** a reflection strip (47) disposed substantially continuously thereon linearly along a proceeding direction of said belt for reflecting an incident light beam, said reflection strip having a different reflection index with respect to said belt.

9. A photoreceptor belt claimed in claim 8, wherein the reflection strip is linearly formed to lie along the proceeding direction at an edge of said photoreceptor belt.

10. A printer comprising:
an optical scanning system according to any of claims 1 to 7.

11. An optical scanning method for use in a printer, comprising the steps of:
providing a photoreceptor belt as obtained in claim 8 or claim 9;
scanning (41-43) a beam onto the circulating photoreceptor belt (46);
detecting said beam being reflected from said photoreceptor belt by the reflection strip (47) disposed substantially continuously thereon, and outputting an electrical signal corresponding to the detected beam as a scanning synchronous signal; and
controlling emission of said beam in said scanning step with respect to said scanning synchronous signal, in order to maintain leading edges of scanning parallel with respect to the substantially continuous reflection strip.

## Patentansprüche

1. Optisches Abtastsystem für einen Drucker, mit:
einem Photorezeptorband (46),
einer optischen Abtasteinheit (41-43) zum Führen eines Strahls auf das Photorezeptorband,
einem Photodetektor (44) zum Feststellen des von der optischen Abtasteinheit emittierten Strahls sowie zum Ausgeben eines elektrischen Signals in Entsprechung zu dem festgestellten Strahl als Abtastsynchronsignal für die optische Abtasteinheit,
einer Systemsteuereinrichtung (45) zum Empfangen des elektrischen Signals und zum Steuern der Emission des Strahls aus der optischen Abtasteinheit (41-43),
**gekennzeichnet durch**:
einen Reflexionsstreifen (47), der im wesentlichen kontinuierlich auf dem Photorezeptorband linear entlang der Transportrichtung des Bandes angeordnet ist, um den Strahl zu reflektieren, wobei der Reflexionsstreifen einen anderen Reflexionsgrad aufweist als das Band,
wobei der Photodetektor (44) zum Feststellen des **durch** den Reflexionsstreifen (47) reflektierten Strahls angeordnet ist, und
die Systemsteuerung (45) angeordnet ist, um die Emission des Strahls aus der optischen Abtasteinheit zu steuern, um die Vorderkanten der Abtaststrahlen parallel in Bezug zu dem im wesentlichen kontinuierlichen Reflexionsstreifen (47) zu halten.

2. Optisches Abtastsystem nach Anspruch 1, **dadurch gekennzeichnet, dass** die optische Abtasteinheit (41-43) einen Strahl auf ein zirkulierendes Photorezeptorband (46) in einer Richtung führt, die mit einem Winkel in Bezug auf die Transportrichtung des Photorezeptorbands (46) geneigt ist.

3. Optisches Abtastsystem nach Anspruch 1 oder 2, **dadurch gekennzeichnet, dass** der Reflexionsstreifen an einem Randteil des Photorezeptorbands angeordnet ist.

4. Optisches Abtastsystem nach Anspruch 1, 2 oder 3, **dadurch gekennzeichnet, dass** der Reflexionsstreifen (47) auf dem Photorezeptorband (46) außerhalb eines vorbestimmten Bildinformations-Aufzeichnungsbereichs angeordnet ist.

5. Optisches Abtastsystem nach Anspruch 4, **dadurch gekennzeichnet, dass** der Bildinformationsbereich in der Mitte des Photorezeptorbands angeordnet ist.

6. Optisches Abtastsystem nach einem der vorstehenden Ansprüche, **dadurch gekennzeichnet, dass** der Reflexionsstreifen (47) mit einem vorbestimmten schmalen Abstand zu dem Rand des Photorezeptorbands (46) nach innen versetzt ist.

7. Optisches Abtastsystem nach Anspruch 6, **dadurch gekennzeichnet, dass** der Reflexionsstreifen (47) aus einem Material ausgebildet ist, das einen anderen Reflexionsgrad aufweist als das Photorezeptorband (46).

8. Photorezeptorband für die Verwendung in einem optischen Abtastsystem eines Druckers, wobei das Photorezeptorband (46) durch einen Reflexionsstreifen (47) **gekennzeichnet** ist, der im wesentlichen kontinuierlich auf dem Photorezeptorband (46) linear entlang der Transportrichtung des Bands angeordnet ist, um einen einfallenden Lichtstrahl zu reflektieren, wobei der Reflexionsstreifen einen anderen Reflexionsgrad aufweist als das Band.

9. Photorezeptorband nach Anspruch 8, **dadurch gekennzeichnet, dass** der Reflexionsstreifen linear entlang der Transportrichtung an einem Rand des Photorezeptorbands angeordnet ist.

10. Drucker mit:
einem optischen Abtastsystem nach einem der Ansprüche 1 bis 7.

11. Optisches Abtastverfahren für die Verwendung in einem Drucker, das die folgenden Schritte umfasst:
Vorsehen eines Photorezeptorbands nach Anspruch 8 oder 9,
Führen (41-43) eines Strahls auf das zirkulierende Photorezeptorband (46),
Feststellen des von dem Photorezeptorband durch den Reflexionsstreifen (47), der im wesentlichen kontinuierlich auf dem Photorezeptorband ausgebildet ist, reflektierten Strahls und Ausgeben eines elektrischen Signals in Entsprechung zu dem festgestellten Strahl als Abtastsynchronsignal, und
Steuern der Emission des Strahls in dem Führungsschritt mit Bezug auf das Abtastsynchronsignal, um die Vorderkanten der Abtaststrahlen parallel in Bezug auf den im wesentlichen kontinuierlichen Reflexionsstreifen zu halten.

## Revendications

1. Système de balayage optique pour une imprimante, comprenant :
une courroie photoréceptrice (46);
une unité de balayage optique (41 à 43) pour amener un faisceau à balayer la courroie photoréceptrice (46) ;
un photodétecteur (44) pour détecter le faisceau émis par ladite unité de balayage optique et pour émettre un signal électrique correspondant au faisceau détecté en tant que signal synchrone de balayage pour ladite unité de balayage optique ;
un contrôleur de système (45) pour recevoir ledit signal électrique et contrôler l'émission dudit faisceau par ladite unité de balayage optique (41 à 43) ;
**caractérisé par** ;
une bande réfléchissante (47) disposée de manière sensiblement continue sur ladite courroie photoréceptrice, de manière linéaire le long d'une direction d'avance de ladite courroie, pour réfléchir ledit faisceau, ladite bande réfléchissante possédant un indice de réflexion différent par rapport à ladite courroie ;
ledit photodétecteur (44) étant agencé pour détecter ledit faisceau réfléchi par ladite bande réfléchissante (47) ; et
le contrôleur de système (45) étant agencé pour contrôler l'émission dudit faisceau par ladite unité de balayage optique afin de maintenir les bords d'attaque du balayage parallèles par rapport à la bande réfléchissante sensiblement continue (47).

2. Système de balayage optique selon la revendication 1, dans lequel ladite unité de balayage optique (41 à 43) amène un faisceau à balayer une courroie photoréceptrice en mouvement (46) dans une direction inclinée à un angle par rapport à une direction d'avance de ladite courroie photoréceptrice (46).

3. Système de balayage optique selon la revendication 1 ou 2, dans lequel ladite bande réfléchissante est disposée sur une partie de bord de ladite courroie photoréceptrice.

4. Système de balayage optique selon la revendication 1, 2 ou 3, dans lequel ladite bande réfléchissante (47) est disposée sur ladite courroie photoréceptrice (46) à l'extérieur d'une zone d'enregistrement d'informations d'image prédéterminée.

5. Système de balayage optique selon la revendication 4, dans lequel ladite zone d'enregistrement d'informations d'image est définie au milieu du ladite courroie photoréceptrice (46).

6. Système de balayage optique selon l'une quelconque des revendications précédentes, dans lequel ladite bande réfléchissante (47) est déportée par rapport à un bord de ladite courroie photoréceptrice (46) par une marge étroite prédéterminée.

7. Système de balayage optique selon la revendication 6, dans lequel la bande réfléchissante (47) est formée d'un matériau possédant un indice de réflexion différent par rapport à la courroie photoréceptrice (46).

8. Courroie photoréceptrice pour utilisation dans un système de balayage optique d'une imprimante, ladite courroie photoréceptrice (46) étant **caractérisée par** une bande réfléchissante (47) disposée dessus de manière sensiblement continue, de manière linéaire le long d'une direction d'avance de ladite courroie, pour réfléchir un faisceau de lumière incidente, ladite bande réfléchissante possédant un indice de réflexion différent par rapport à ladite courroie.

9. Courroie photoréceptrice selon la revendication 8, dans laquelle la bande réfléchissante est formée de manière linéaire afin de reposer le long de la direction d'avance sur un bord de ladite courroie photoréceptrice.

10. Imprimante comprenant :
un système de balayage optique selon l'une quelconque des revendications 1 à 7.

11. Procédé de balayage optique pour utilisation dans une imprimante, comprenant les étapes consistant à :
prévoir une courroie photoréceptrice selon la revendication 8 ou la revendication 9 ;
amener un faisceau à balayer (41 à 43) la courroie photoréceptrice en mouvement (46) ;
détecter ledit faisceau réfléchi de ladite courroie photoréceptrice par la bande réfléchissante (47) disposée de manière sensiblement continue dessus, et émettre un signal électrique correspondant au faisceau détecté en tant que signal synchrone de balayage ; et
contrôler l'émission dudit faisceau lors de ladite étape de balayage par rapport audit signal synchrone de balayage, afin de maintenir les bords d'attaque du balayage parallèles par rapport à la bande réfléchissante sensiblement continue.
